# EUROPÄISCHE PATENTSCHRIFT

(11) **EP 2 033 922 B1**
(45) Veröffentlichungstag und Bekanntmachung des Hinweises auf die Patenterteilung: **09.03.2016**
(21) Anmeldenummer: 08021315.0
(22) Anmeldetag: 14.03.2007
(51) Int. Cl.: B66B 5/16, H02P 25/22, H02P 27/06, H02K 3/28, H02K 11/00, B66B 11/04, H02K 5/22, H02K 16/04

(54) **Elektromotor für einen Aufzugantrieb**
Electric motor with a lift drive
Moteur électrique pour un entraînement d'ascenseur

(30) Priorität: 16.03.2006 EP 06005374
(43) Veröffentlichungstag der Anmeldung: 11.03.2009
(62) Teilanmeldung aus: 07723256.9
(73) Patentinhaber: ThyssenKrupp Elevator AG, 45143 Essen (DE)
(72) Erfinder: Breidenstein, Olaf, 90449 Nürnberg (DE); Gessner, Torsten, 40885 Ratingen (DE); Hermann, Günter, 73669 Lichtenwald (DE); Jetter, Markus, 70794 Filderstadt (DE); Möllgaard, Nils-Anton, 73614 Schorndorf (DE); Resag, Uwe, 72631 Aichtal (DE); Schulze, Jochen, 72770 Reutlingen (DE); Vogler, Eberhard, 73765 Neuhausen (DE); Wilhelm, Andreas, 73116 Wäschenbeuren (DE)
(74) Vertreter: m patent group

(56) Entgegenhaltungen:
- EP-A1- 0 468 168
- EP-A2- 1 104 079
- DE-A1- 3 332 515
- DE-A1- 19 754 694
- JP-A- 59 213 264

## Beschreibung

Die Erfindung betrifft einen Elektromotor für einen Aufzugantrieb mit einer Klemmanordnung, wie in Anspruch 1 definiert. Weitere Merkmale der Erfindung sind in den Unteransprüchen 2-12 definiert.

Nach heutigem Stand der Technik werden getriebelose Aufzugantriebe als permanenterregte Synchronmotoren ausgeführt. Dabei ist es erforderlich, dass jede einzelne Motorwicklung aus dem Stator ausgeführt und an Klemmen angeschlossen wird, um von dort dann als Motoranschlusskabel an einzelne Frequenzumrichter geführt zu werden. Es werden somit mehrere Klemmen und Klemmenkästen am Motor benötigt. Dies ist insbesondere bei großen Motoren problematisch, bei denen die zu verwendenden Kabel, Klemmen und Frequenzumrichter wegen der zunehmenden Größe schwer handhabbar sind.

Ein Beispiel einer Klemmanordnung für eine Elektromotor für einen Aufzugsantrieb ist aus der Druckschrift DE-A-19754694 offenbart.

Es ist darauf zu achten, dass jeder einzelne Klemmenkasten berührungssicher geschlossen werden kann, wobei die einzeln ausgeführten Motorwicklungen durch den Motor in die Klemmenkästen geführt werden müssen. Die Unübersichtlichkeit der Anschlüsse nimmt nach Anzahl der ausgeführten Wicklungen bzw. der Anzahl der Motoranschlusskabel zu. Außerdem ist die Zugänglichkeit zu den Klemmenkästen teilweise durch die Vielzahl der Klemmenkästen nur bedingt gegeben. Hinzu kommt, dass die Verlegung von Motoranschlusskabeln an den Motor aufwendig ist und der notwendige Bauraum für den Motor durch die Vielzahl der Klemmenkästen vergrößert wird. Es stellt sich somit die Aufgabe, einen Elektromotor bzw. ein Motorgehäuse derart zu gestalten, dass mehrere Motorwicklungen in Klemmen ausgeführt werden können und dabei nur wenige Klemmenkästen benötigt werden, dass nur ein geringer zusätzlicher Bauraum durch die Vielzahl der Klemmen benötigt wird und die Übersichtlichkeit bei den Motoranschlusskabeln vorhanden ist. Des weiteren sollte der Zugang zu dem Motor nicht durch Motoranschlusskabel eingeschränkt sein.

Es soll folglich ein Elektromotor, insbesondere ein getriebeloser Motor, vorgestellt werden, der kostengünstig hersteilbar und montierbar ist und bei dem die Verkabelung und Verdrahtung einfach durchzuführen ist.

Der vorgestellte Elektromotor ist für einen Aufzugantrieb, insbesondere einen Aufzugantrieb der vorstehend beschriebenen Art, vorgesehen. Dieser weist ein Motorgehäuse und eine Anzahl an Motorwicklungen auf, die an mindestens einer Klemme angeschlossen sind, wobei an dem Motorgehäuse Rippen oder Stege angeordnet sind, zwischen denen die mindestens eine Klemme, üblicherweise mehrere Klemmen, angeordnet ist.

Der beschriebene Elektromotor dient insbesondere zum Antreiben von Aufzügen, deren Fahrkorb über Tragemittel mit einem Gegengewicht verbunden ist, wie bspw. Seilaufzüge.

Das Motorgehäuse des Elektromotors, der insbesondere mit mehreren Motorwicklungen ausgeführt ist, ist so gestaltet, dass zwischen zwei Rippen des Motorgehäuses eine Art Kabelkanal gebildet wird. Dieser Bereich ist vorzugsweise auf beiden Seiten des Motors so ausgeführt, dass in diesem, also zwischen den beiden Rippen bzw. Stegen, die Klemmen sowie die ausgeführte Motorwicklungen verlegt bzw. befestigt werden können. So kann auch durch einfache und wenige Blechabdeckungen ein notwendiger Berührungsschutz der Anschlussklemmen erreicht werden. Das Motoranschlusskabel wird bspw. nach unten ausgeführt und kann von dort direkt in einen Kabelkanal geführt werden, ohne die Zugänglichkeit zu dem Motor einzuschränken. Lediglich durch Entfernen von wenigen Abdeckungen kann die Zugänglichkeit zu den ggf. vielen Klemmen erreicht werden.

Der vorgestellte Elektromotor ist vorzugsweise als Synchronmotor mit einem Rotor und einem Stator ausgebildet, wobei die Statorwicklungen an die mindestens eine Klemme angeschlossen sind.

Es bietet sich an, die Rippen in Umfangsrichtung anzuordnen. Außerdem sollten die Rippen in ihrem Verlauf eine vorbestimmte Höhe über der Gehäuseoberfläche nicht unterschreiten.

Es kann vorgesehen sein, dass mehrere Klemmen zwischen mindestens zwei Rippen angeordnet sind. Weiterhin können die Klemmen zwischen den Rippen nebeneinander und/oder in Umfangsrichtung hintereinander angeordnet sein.

In Ausgestaltung sind die Anschlüsse der Motorwicklungen ebenfalls zwischen den Rippen angeordnet.

Bei dem beschriebenen Elektromotor kann vorgesehen sein, dass Motoranschlusskabel von den Klemmen weg nach unten aus dem Motorbereich geführt sind. In diesem Fall sind die Motoranschlusskabel vorzugsweise nebeneinander aus dem Motorbereich geführt.

Weiterhin können von dem Motorgehäuse wegweisende Kanten von mindestens zwei nebeneinanderliegenden Rippen mit einer Abdeckung miteinander verbunden sein.

Es bietet sich an, dass die Rippen als Stützrippen zur Stabilisierung des Gehäuses dienen und dafür geeignet dimensioniert und angeordnet sind.

Das erfindungsgemäße Motorgehäuse weist Rippen auf, zwischen denen mindestens eine Klemme angeordnet ist. Dieses Motorgehäuse ist insbesondere für Elektromotoren der vorstehend beschriebenen Art geeignet.

Es ist vorgesehen, dass ein Motor für einen Aufzugantrieb in mehrere Segmente unterteilt ist, wobei jeweils mindestens eine Motorwicklung für jede Phase ausgebildet ist. Die Segmente sind mit Kabeln an Klemmen angeschlossen und das Motorgehäuse weist typischerweise an seiner Außenseite in Umfangsrichtung Rippen auf, wobei mindestens zwei Rippen zwischen sich einen Raum bilden, in dem die Klemmen, die Kabel der Motorwicklungen und die Motoranschlusskabel aufgenommen werden können.

Die Rippen sollten derart ausgebildet sein, dass entlang einer vorbestimmten Rippenlänge eine festgelegte Rippenhöhe nicht unterschritten wird und im Zwischenraum zwischen zwei Rippen des Motorgehäuses eine Art Kabelkanal gebildet wird. Dieser Bereich ist insbesondere auf beiden Seiten der Maschine so optimiert, dass zwischen den Rippen die Klemmen sowie die herausgeführten Motorwicklungen bzw. deren Anschlüsse verlegt bzw. befestigt werden können.

Durch einfache und wenige Blechabdeckungen, die an den Rippen zu befestigen sind, kann ein geschlossener Einbauraum für die Kabel und Klemmen gebildet und ein erforderlicher Berührungsschutz der Anschlussklemmen erreicht werden.

Die zur Energieversorgung des Motors notwendigen Motoranschlusskabel werden bspw. im unteren Motorbereich herausgeführt und können von dort direkt in einen Kabelkanal geleitet werden, ohne durch ein Kabelwirrwarr die Zugänglichkeit zu der Maschine einzuschränken. Eine Zuführung von Kabeln kann zu einer Seite - eine Abführung zu der anderen Seite erfolgen.

Auf diese Weise ist es möglich, jeden einzelnen Klemmenkasten berührungssicher zu schließen. Es ist zu beachten, dass die einzelnen aus dem Motor bzw. dem Stator herausgeführten Motorwicklungen durch den Motor in die Klemmenkästen geführt werden müssen. Durch die vorgeschlagene Anordnung der Anschlüsse und der herausgeführten Wicklungen sowie die Anzahl der Motoranschlusskabel wird die Übersichtlichkeit nicht eingeschränkt. Die Zugänglichkeit zu den Klemmenkästen ist auch bei einer Vielzahl an Klemmenkästen ausgezeichnet.

Die Verlegung von Motoranschlusskabeln an den Motor erweist sich als einfache Tätigkeit. Weiterhin ist der für den Motor erforderliche Bauraum durch die Klemmenkästen nicht vergrößert.

Die Erfindung ist anhand von Ausführungsbeispielen in der Zeichnung schematisch dargestellt und wird im Folgenden unter Bezugnahme auf die Zeichnung ausführlich beschrieben.
Figur 1 zeigt den erfindungsgemäßen Elektromotors vereinfacht dargestellt zur Verdeutlichung einer Klemmenanordnung.
Figur 2 zeigt in vereinfachter Darstellung einen Elektromotor in einer Draufsicht.

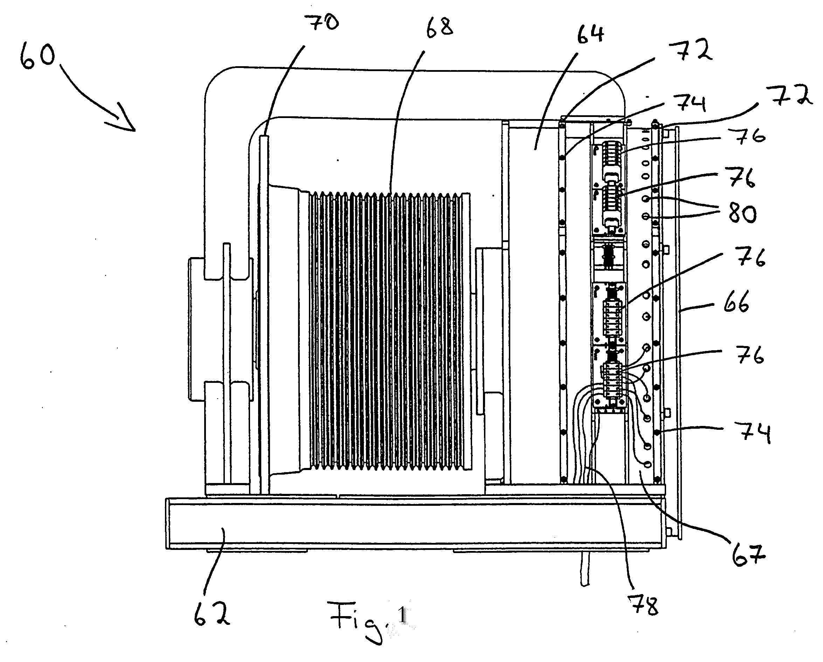

In Figur 1 ist in vereinfachter Darstellung ein Elektromotor 60 wiedergegeben. In der Darstellung sind ein Maschinenrahmen 62, ein Statorgehäuse 64, eine Rotorabdeckung 66 und eine Treibscheibe 68 mit einer Bremsscheibe 70 gezeigt. Weiterhin sind zwei Rippen 72 dargestellt, in denen sich Befestigungspunkte 74 für eine Abdeckung befinden.

Weiterhin zeigt Figur 1 zwischen den beiden Rippen 72 angeordnet vier Klemmen 76, die vorzugsweise jeweils für ein Segment vorgesehen sind. Motoranschlusskabel 78 verbinden die Klemmen 76 mit den Umrichtern.

Für die Verkabelung der Spulen sind in dem Statorgehäuse 64 Durchgangslöcher 80 vorgesehen. Durch diese werden die Kabel der Spulen geführt.

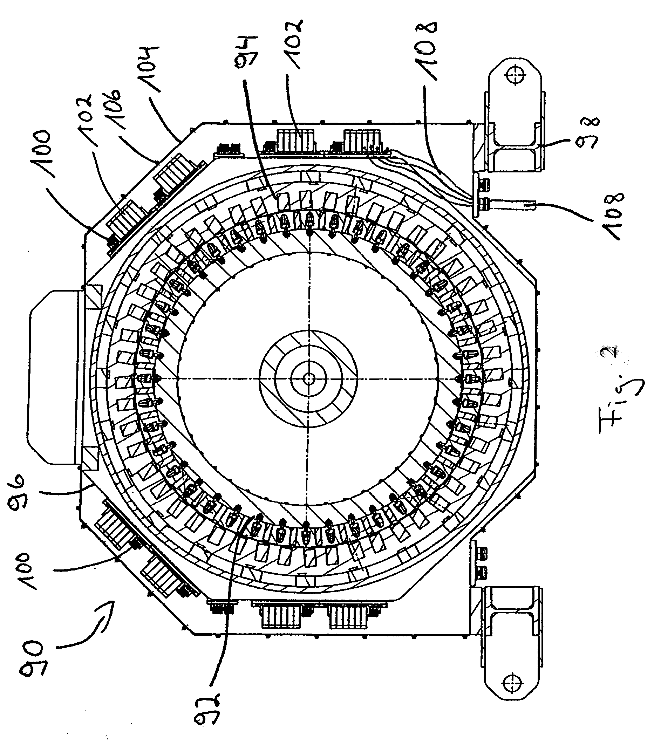

In Figur 2 ist in vereinfachter Darstellung ein Elektromotor für einen Aufzugantrieb dargestellt, der insgesamt mit der Bezugsziffer 90 bezeichnet ist. Der Elektromotor 90 umfasst einen Rotor 92 und einen Stator 94, ein Motorgehäuse 96 und einen Maschinenrahmen 98. Der Rotor 92 ist als Innenläufer in dem Stator 94 drehbar gelagert.

Auf dem Motorgehäuse 96 sind Rippen bzw. Stützrippen 100 angeordnet, wobei zwischen den Rippen 100 Klemmen 102 vorgesehen sind. Darüber befindet sich eine Klemmenraumabdeckung 104, die über Befestigungspunkte 106 verfügt. Motoranschlusskabel 108 sind die Kabel zum Verbinden der Klemmen 102 mit den Umrichtern.

## Patentansprüche

1. Elektromotor für einen Aufzugantrieb, mit einem Motorgehäuse (96) und einer Anzahl an Motorwicklungen, die an mindestens einer Klemme (76, 102) angeschlossen sind, wobei an dem Motorgehäuse (96) Rippen (72, 100) oder Stege angeordnet sind, wobei zwei Rippen (72, 100) oder Stege zwischen sich einen Raum bilden, in dem die mindestens eine Klemme (76, 102), die Leitungen der Motorwicklungen und Zuleitungen aufgenommen sind.

2. Elektromotor nach Anspruch 1, der als Synchronmotor mit einem Rotor (92 ,160) und einem Stator (10, 50, 94, 162) ausgebildet ist, wobei die Statorwicklungen an die mindestens eine Klemme (76, 102) angeschlossen sind.

3. Elektromotor nach Anspruch 1 oder 2, bei dem die Rippen (72, 100) in Umfangsrichtung angeordnet sind.

4. Elektromotor nach einem der Ansprüche 1 bis 3, bei dem die Rippen (72, 100) in ihrem Verlauf eine vorbestimmte Höhe über der Gehäuseoberfläche nicht unterschreiten.

5. Elektromotor nach einem der Ansprüche 1 bis 4, bei dem mehrere Klemmen (76, 102) zwischen mindestens zwei Rippen (72, 100) angeordnet sind.

6. Elektromotor nach einem der Ansprüche 1 bis 5, bei dem die Klemmen (76, 102) zwischen den Rippen (72, 100) nebeneinander und/oder in Umfangsrichtung hintereinander angeordnet sind.

7. Elektromotor nach einem der Ansprüche 1 bis 6, bei dem Anschlüsse der Motorwicklungen ebenfalls zwischen den Rippen (72, 100) angeordnet sind.

8. Elektromotor nach einem der Ansprüche 1 bis 7, bei dem von den Klemmen (76, 102) weg Motoranschlusskabel nach unten aus dem Motorbereich geführt sind.

9. Elektromotor nach Anspruch 8, bei dem die Motoranschlusskabel nebeneinander aus dem Motorbereich geführt sind.

10. Elektromotor nach einem der Ansprüche 1 bis 9, bei dem von dem Motorgehäuse (96) wegweisende Kanten von mindestens zwei nebeneinanderliegenden Rippen (72, 100) mit einer Abdeckung miteinander verbunden sind.

11. Elektromotor nach einem der Ansprüche 1 bis 10, bei dem die Rippen (72, 100) als Stützrippen zur Stabilisierung des Gehäuses dienen.

12. Motorgehäuse für einen Elektromotor, insbesondere für einen Elektromotor (60, 90) nach einem der Ansprüche 1 bis 11, mit an dem Motorgehäuse (96) angeordneten Rippen (72, 100) oder Stegen, wobei zwei Rippen (72, 100) oder Stege zwischen sich einen Raum bilden, in dem mindestens eine Klemme (76, 102) angeordnet ist und der dazu ausgebildet ist, die Leitungen der Motorwicklungen und Zuleitungen aufzunehmen.

## Claims

1. Electric motor for an elevator drive with a motor housing (96) and a number of motor windings connected to at least one terminal (76, 102), wherein the motor housing (96) comprises ribs (72, 100) or webs, wherein two ribs (72, 100) or webs form a space between one another, in which the at least one terminal (76, 102), the connections of the motor windings and connecting cables are received.

2. Electric motor according to claim 1, provided as a synchronous motor with a rotor (92, 160) and a stator (10, 50, 94, 162), wherein the stator windings are connected to the at least one terminal (76, 102).

3. Electric motor according to claim 1 or claim 2, in which the ribs (72, 100) are arranged in circumferential direction.

4. Electric motor according to any one of claims 1 to 3, in which the ribs (72, 100) do not exceed a predetermined height above the housing surface.

5. Electric motor according to any one of claims 1 to 4, in which a number of terminals (76, 102) is arranged between at least two ribs (72, 100).

6. Electric motor according to any one of claims 1 to 5, in which the terminals (76, 102) are arranged between the ribs (72, 100) next to one another and/or following one another in circumferential direction.

7. Electric motor according to any one of claims 1 to 6, in which the connections of the motor windings are also arranged between ribs (72, 100).

8. Electric motor according to any one of claims 1 to 7, in which the motor connecting cables are passed out of the motor area downwardly from the terminals (76, 102).

9. Electric motor according to claim 8, in which the motor connecting cables are led out of the motor area next to one another.

10. Electric motor according to any one of claims 1 to 9, in which edges of at least two adjacent ribs (72, 100) facing away from the motor housing (96) are connected to one another with a cover.

11. Electric motor according to any one of claims 1 to 10, in which the ribs serve as support ribs for stabilizing the housing.

12. Motor housing for an electric motor, especially for an electric motor (60, 90) according to any one of claims 1 to 11, comprising ribs (72, 100) or webs arranged on the motor housing, wherein two ribs (72, 100) or webs form a space between one another, in which at least one terminal (76, 102) is arranged, and which is provided to receive connections of the motor windings and connecting cables.

## Revendications

1. Moteur électrique pour un entraînement d'ascenseur ayant un carter de moteur (96) et un ensemble d'enroulements de moteur connectés à au moins une borne (76, 102), dans lequel le carter de moteur (96) comporte des nervures ou bandes (72, 100), dans lequel deux nervures ou bandes (72, 100) forment un espace entre elles, dans lequel sont reçus la au moins une borne (76, 102), les connexions des enroulements de moteur et les câbles de connexion.

2. Moteur électrique selon la revendication 1, fourni sous la forme d'un moteur synchrone muni d'un rotor (92, 160) et d'un stator (10, 50, 94, 162), dans lequel les enroulements de stator sont connectés à la au moins une borne (76, 102).

3. Moteur électrique selon la revendication 1 ou la revendication 2, dans lequel les nervures (72, 100) sont agencées dans une direction circonférentielle.

4. Moteur électrique selon l'une quelconque des revendications 1 à 3, dans lequel les nervures (72, 100) ne dépassent pas une hauteur prédéterminée au-dessus de la surface de carter.

5. Moteur électrique selon l'une quelconque des revendications 1 à 4, dans lequel un ensemble de bornes (76, 102) est agencé entre au moins deux nervures (72, 100).

6. Moteur électrique selon l'une quelconque des revendications 1 à 5, dans lequel les bornes (76, 102) sont agencées entre les nervures (72, 100) les unes à côté des autres et/ou les unes après les autres dans une direction circonférentielle.

7. Moteur électrique selon l'une quelconque des revendications 1 à 6, dans lequel les connexions des enroulements de moteur sont également agencées entre les nervures (72, 100) .

8. Moteur électrique selon l'une quelconque des revendications 1 à 7, dans lequel les câbles de connexion de moteur sont passés en dehors de la zone de moteur vers le bas à partir des bornes (76, 102).

9. Moteur électrique selon la revendication 8, dans lequel les câbles de connexion de moteur sont guidés en dehors de la zone de moteur les uns à côté des autres.

10. Moteur électrique selon l'une quelconque des revendications 1 à 9, dans lequel des bords d'au moins deux nervures adjacentes (72, 100) s'éloignant du carter de moteur (96) sont reliés l'un à l'autre par un capot.

11. Moteur électrique selon l'une quelconque des revendications 1 à 10, dans lequel les nervures servent de nervures de support pour stabiliser le carter.

12. Carter de moteur pour un moteur électrique, en particulier pour un moteur électrique (60, 90) selon l'une quelconque des revendications 1 à 11, comportant des nervures ou des bandes (72, 100) agencées sur le carter de moteur, dans lequel deux nervures ou bandes (72, 100) forment un espace entre elles, dans lequel au moins une borne (76, 102) est agencée, et qui est destiné à recevoir des connexions des enroulements de moteur et des câbles de connexion.
